# EUROPÄISCHE PATENTANMELDUNG

(11) **EP 3 457 257 A2**
(43) Veröffentlichungstag der Anmeldung: **20.03.2019**
(21) Anmeldenummer: 18000686.8
(22) Anmeldetag: 20.08.2018
(51) Int. Cl.: G06F 3/039, G06F 3/0488

(54) **BEDIEN- UND ANZEIGEGERÄT ZUR STEUERUNG EINER MEHRZAHL AN ARBEITSGERÄTEN**

(30) Priorität: 24.08.2017 DE 102017008057
(71) Anmelder: Competence Center ISOBUS e.V., 49076 Osnabrück (DE)
(72) Erfinder: Stöcklin, Volker, 77975 Ringsheim (DE); Roeingh, Moritz, 49090 Osnabrück (DE)
(74) Vertreter: Lichti - Patentanwälte Partnerschaft mbB

(57) **Zusammenfassung**

Es wird ein Bedien- und Anzeigegerät zur Steuerung einer Mehrzahl an Arbeitsgeräten, wie landwirtschaftlichen Maschinen etc., mit einem berührungsempfindlichen Bildschirm vorgeschlagen. Das Bedien- und Anzeigegerät ist derart programmtechnisch eingerichtet dass es den berührungsempfindlichen Bildschirm in Abhängigkeit von einem jeweiligen Arbeitsgerät in eine Mehrzahl an Bildschirmsegmenten unterschiedlicher Anzahl und/oder Form unterteilt, welche infolge Berührung eines jeweiligen Bildschirmsegmentes jeweils zur Anzeige und/oder Steuerung verschiedener Funktionen des jeweiligen Arbeitsgerätes dienen, um in Abhängigkeit von einem jeweiligen Arbeitsgerät jeweils ein individuelles Bedien- und/oder Anzeigemenu zu erzeugen. Dem berührungsempfindlichen Bildschirm ist dabei eine Mehrzahl an lösbar an dem Bedien- und Anzeigegerät befestigbaren Rahmen zugeordnet, welche jeweils eine einer jeweiligen Anordnung der Mehrzahl an Bildschirmsegmenten des berührungsempfindlichen Bildschirms entsprechende Anordnung an Stegen aufweisen, um die Bildschirmsegmente eines jeweiligen Bedien- und/oder Anzeigemenus haptisch voneinander zu trennen und die Bedienerfreundlichkeit auf diese Weise zu verbessern.

## Beschreibung

Die Erfindung betrifft ein Bedien- und Anzeigegerät zur Steuerung einer Mehrzahl an Arbeitsgeräten, mit wenigstens einem berührungsempfindlichen Bildschirm, wobei das Bedien- und Anzeigegerät derart programmtechnisch eingerichtet ist, dass es den berührungsempfindlichen Bildschirm in eine' Mehrzahl an Bildschirmsegmenten zu unterteilen vermag, welche infolge Berührung eines jeweiligen Bildschirmsegmentes zur Anzeige und/oder Steuerung verschiedener Funktionen des Arbeitsgerätes dienen, um ein Bedien- und/oder Anzeigemenü zu erzeugen.

Derartige Bedien- und Anzeigegeräte sind in verschiedenartiger Ausgestaltung bekannt, wobei durch Berühren des üblicherweise als "Touchscreen" bezeichneten berührungsempfindlichen Bildschirms an verschiedenen Bildschirmsegmenten unterschiedliche Steuerbefehle generiert werden können. Die Funktionen der Bildschirmsegmente können dabei grafisch angezeigt werden, so dass eine mehr oder minder intuitive Bedienung ermöglicht wird.

Mit einem berührungsempfindlichen Bildschirm ausgestattete Bedien- und Anzeigegeräte sind als solche beispielsweise zur Steuerung von Navigationsgeräten von Kraftfahrzeugen bekannt. So beschreibt die DE 20 2014 003 240 U1 ein derartiges Bedien- und Anzeigegerät, welches derart programmtechnisch eingerichtet ist, dass es den berührungsempfindlichen Bildschirm in eine Mehrzahl an Bildschirmsegmenten unterteilt, welche infolge Berührung eines jeweiligenBildschirmsegmentes zur Anzeige und/oder Steuerung verschiedener Funktionen des Kraftfahrzeugs dienen. Darüber hinaus ist dem berührungsempfindlichen Bildschirm eine mit Aussparungen versehene Schablone zugeordnet, welche fest, aber derart verstell- bzw. verschiebbar an dem berührungsempfindlichen Bildschirm angeordnet ist, dass sie zwischen einer Eingabestellung, in welcher sie einen zur Eingabe von Befehlen vorgesehenen berührungsempfindlichen Bildschirmbereich derart abdeckt, dass die Aussparungen der Schablone entsprechend der mit unterschiedlichen Funktionen belegten Bildschirmsegmente angeordnet sind, um letztere haptisch voneinander zu trennen, und einer Staustellung, in welcher sie den zur Eingabe von Befehlen vorgesehenen berührungsempfindlichen Bildschirmbereich freilässt, hin und her verschiebbar ist.

Darüber hinaus ist es bekannt, mit ähnlichen, auf berührungsempfindlichen Bildschirmen angeordneten Schablonen sehbehinderten Menschen eine Bedienung des Bildschirms zu erleichtern. Der DE 10 2012 100 717 A1 ist eine derartige Schablone zur Erleichterung der Eingabe von Informationen in Geldautomaten, automatische Kassensysteme oder andere Einrichtungen zur Handhabung von Münzen mittels eines berührungsempfindlichen Bildschirms zu entnehmen, wobei die Schablone mit einem Positionierungselement ausgestattet sein kann, welches mit einem komplementären Positionierungselement des berührungsempfindlichen, Bildschirms zusammenwirkt, um sie in der vorgesehenen Position relativ zu dem Bildschirm anzuordnen. Die Schablone ist hierbei ebenfalls fest, aber insbesondere klappbar mit dem Bildschirm verbunden. In der DE 20 2010 011 565 U1 geht es um eine weitere Schablone für berührungsempfindliche Bildschirme von Tablet-Computern oder Mobiltelefonen, welche eine an eine hierauf angezeigte Tastatur angepasste Mehrzahl an Aussparungen aufweist und die durch die verschiedenen Tasten definierten Bildschirmsegmente auf diese Weise haptisch voneinander trennt, wobei die Schablone lösbar an drei benachbarten Rändern des berührungsempfindlichen Bildschirms befestigt werden kann. Schließlich sind aus der JP 2008-140 245 A Schablonen zur Anordnung auf dem berührungsempfindlichen von Kopiergeräten bekannt, um wiederum sehbehinderten Menschen deren Bedienung zu erleichtern.

Bedien- und Anzeigegeräte der eingangs genannten Art können in jüngerer Zeit insbesondere auch zur Steuerung verschiedener Werkzeugmaschinen, Baumaschinen, landwirtschaftlichen Maschinen und dergleichen zum Einsatz gelangen. Vor allem im Falle von landwirtschaftlichen Maschinen gehen neuere Bestrebungen dahin, mittels einer einzigen Steuereinrichtung verschiedenartige landwirtschaftliche Maschinen, wie beispielsweise Düngerstreuer, Sämaschinen, Feldspritzen und dergleichen, sowie vorzugsweise auch einander entsprechende landwirtschaftliche Maschinen verschiedener Hersteller bedienen zu können, um dem Benutzer eine hohe Kompatibilität sowie insbesondere einheitliche Bedienmenus zu bieten, so dass er mit derselben Steuereinrichtung verschiedene Maschinen - also verschiedenartige Maschinen gleicher oder verschiedener Hersteller und/oder funktionsgleiche bzw. funktionsähnliche Maschinen verschiedener Hersteller - zu steuern vermag.

So sind moderne landwirtschaftliche Zugmaschinen, wie Traktoren, üblicherweise mit einem auch als Traktor-ECU ("Electronic Control Unit") bezeichneten Traktorsteuergerät in Form eines Jobrechners ausgestattet, welches zum Zwecke der Steuerung und Überwachung der Maschinenfunktionen von verschiedenen, von dem Traktor gezogenen oder an seinen Dreipunkt-Kraftheber angebauten landwirtschaftlichen Maschinen mit einer auch als "Virtual Terminal" oder "Universal Terminal" bezeichneten zentralen Steuereinrichtung zur Steuerung und Überwachung der landwirtschaftlichen Maschinen in Verbindung steht, welche im Führerhaus des Traktors fest installiert oder auch mobil und folglich fernbedienbar sein kann. Die zentrale Steuereinrichtung verfügt dabei üblicherweise über eine Anzeigeeinrichtung, z.B. in Form eines Touchscreens, und/oder verschiedene weitere Bedienelemente, wie Tasten, Knöpfe, Hebel, Dreh- und Schieberegler etc., um die verschiedenen Funktionen der landwirtschaftlichen Maschine vom Führerhaus steuern und überwachen zu können. Die Funktionen sind abhängig von der jeweiligen landwirtschaftlichen Maschine, wobei insbesondere auch Arbeitsgänge im Voraus gemäß der gewünschten Bearbeitungsstrategie festgelegt und während der Feldarbeit abgearbeitet werden können. Letzteres kann z.B. in Abhängigkeit einer elektronischen Feldkarte geschehen, wobei die jeweilige Ist-Position der Maschine mittels eines Positionserfassungssystems, wie GPS oder dergleichen, erfasst wird. Die Verbindung der zentralen Steuereinrichtung mit dem Jobcomputer der landwirtschaftlichen Maschine kann mittels geeigneter Kabel, aber auch drahtlos erfolgen. Die Kommunikation der zentralen Steuereinrichtung mit dem Jobcomputer der landwirtschaftlichen Maschine erfolgt üblicherweise über entsprechende Schnittstellen, wie insbesondere solcher gemäß einem ISOBUS-Datenbussystem, wie es mittels der Norm ISO 11783 vereinheitlicht ist.

Der zentralen Steuereinrichtung sind in der Regel auch als "AUX-Geräte" bezeichnete Zusatz-Bedien- und Anzeigegeräte zugeordnet, welche zur Steuerung einer jeweiligen landwirtschaftlichen Maschine während der Feldarbeit dienen und üblicherweise nach Art von Joysticks ausgebildet sind, welche mit zusätzlichen Handgriffen und Drucktasten versehen sein können. Die Bedienung erweist sich insoweit als umständlich, als die Tasten insbesondere dann, wenn das Zusatz-Bedien- und Anzeigegerät zur Steuerung verschiedener landwirtschaftlicher Maschinen dienen soll, nicht beschriftet oder allenfalls mit generischen Symbolen versehen sind, so dass sich der Bediener merken muss, welche Taste bzw. welche Bewegung des Joysticks bei welcher Maschine welche Funktion auslöst. Andererseits eignet sich auch der Touchscreen der zentralen Steuereinrichtung nur bedingt zur Steuerung der Maschine während der Feldarbeit, da es bei den hierbei auftretenden Schwingungen und Vibrationen schwierig ist, ein jeweiliges Bildschirmsegment des Touchscreens, welches die gewünschte Funktion auslöst, zu treffen, zumal der Blick des Bedieners dabei stets auf den Touchscreen gerichtet sein muss und er somit von der eigentlichen Arbeit abgelenkt wird.

Der Erfindung liegt die Aufgabe zugrunde, ein Bedien- und Arbeitsgerät zur Steuerung einer Mehrzahl an Arbeitsgeräten, insbesondere landwirtschaftlichen Maschinen, der eingangs genannten Art unter zumindest weitestgehender Vermeidung der vorgenannten Nachteile auf einfache und kostengünstige Weise dahingehend weiterzubilden, dass es unter Gewährleistung einer Steuerung unterschiedlicher Arbeitsgeräte eine einfache Bedienung ermöglicht.

Erfindungsgemäß wird diese Aufgabe bei einem Bedien- und Anzeigegerät der eingangs genannten Art dadurch gelöst, dass es ferner derart programmtechnisch eingerichtet ist, dass es den berührungsempfindlichen Bildschirm in Abhängigkeit von einem jeweiligen Arbeitsgerät in eine Mehrzahl an Bildschirmsegmenten unterschiedlicher Anzahl und/oder Form unterteilt, welche infolge Berührung eines jeweiligen Bildschirmsegmentes jeweils zur Anzeige und/oder Steuerung verschiedener Funktionen des jeweiligen Arbeitsgerätes dienen, um in Abhängigkeit von einem jeweiligen Arbeitsgerät jeweils ein individuelles Bedien- und/oder Anzeigemenu zu erzeugen, und dass dem berührungsempfindlichen Bildschirm eine Mehrzahl an lösbar an dem Bedien- und Anzeigegerät befestigbaren Rahmen zugeordnet ist, welche jeweils eine einer jeweiligen Anordnung der Mehrzahl an Bildschirmsegmenten des berührungsempfindlichen Bildschirms im Wesentlichen entsprechende Anordnung an Stegen aufweisen, um die Bildschirmsegmente eines jeweiligen Bedien- und/oder Anzeigemenus haptisch voneinander zu trennen.

Die erfindungsgemäße Ausgestaltung des Bedien- und Anzeigegerätes ermöglicht zunächst aufgrund dessen, dass es den berührungsempfindlichen Bildschirm in Abhängigkeit von einem jeweiligen Arbeitsgerät in eine Mehrzahl an Bildschirmsegmenten unterschiedlicher Anzahl und/oder Form unterteilt, welche infolge Berührung eines jeweiligen Bildschirmsegmentes jeweils zur Anzeige und/oder Steuerung verschiedener Funktionen des jeweiligen Arbeitsgerätes dienen, eine universelle Verwendung des Bedien- und Anzeigegerätes für praktisch beliebige Arbeitsgeräte unterschiedlichen Typs und Funktion, da in Abhängigkeit von einem jeweiligen Arbeitsgerät jeweils ein individuelles Bedien- und/oder Anzeigemenu erzeugt wird, welches der Benutzer mehr oder minder intuitiv zu bedienen vermag, weil der berührungsempfindliche Bildschirm die den jeweiligen Bildschirmsegmenten zugeordneten Funktionen anzeigen kann. Die Unterteilung in Bildschirmsegmente unterschiedlicher Anzahl und Form gewährleistet dabei eine individuelle Anpassung an die Funktionen des jeweiligen Arbeitsgerätes, so dass eine Vielzahl an individuellen Bedieneinrichtungen für ein jeweiliges Arbeitsgerät entbehrlich wird.

Die erfindungsgemäße Ausgestaltung des Bedien- und Anzeigegerätes gewährleistet es dem Benutzer darüber hinaus aufgrund dessen, dass dem berührungsempfindlichen Bildschirm eine Mehrzahl an lösbar an dem Bedien- und Anzeigegerät befestigbaren Rahmen zugeordnet ist, welche jeweils eine einer jeweiligen Anordnung der Mehrzahl an Bildschirmsegmenten des berührungsempfindlichen Bildschirms im Wesentlichen entsprechende Anordnung an Stegen aufweist, das Bedien- und Anzeigegerät praktisch "blind" zu bedienen, da ein jeweiliger Rahmen, welcher an die Anzahl und Form der Bildschirmsegmente eines jeweiligen, einem jeweiligen Arbeitsgerät zugeordneten Bedien- und/oder Anzeigemenus angepasst ist, die verschiedenen Bildschirmsegmente haptisch voneinander trennt, so dass der Benutzer die einzelnen Bildschirmsegmente nach Art von "Tasten" erfühlen kann und er den berührungsempfindlichen Bildschirm nur dann betrachten muss, wenn er die einem bestimmten Bildschirmsegment zugeordnete(n) Funktion(en) (noch) nicht kennt. Insbesondere bei widrigen Umgebungsbedingungen, z.B. bei Schwingungen oder Vibrationen, wie sie beim Einsatz landwirtschaftlicher Maschinen, aber auch beim Einsatz von Bau-, Werkzeugmaschinen oder dergleichen, häufig auftreten, vereinfachen es die erfindungsgemäßen Rahmen dem Benutzer überdies, das "richtige" Bildschirmsegment manuell zu berühren und nicht versehentlich ein benachbartes Bildschirmsegment zu treffen und dabei eine unbeabsichtigte Funktion auszulösen.

Wie bereits erwähnt, kann das erfindungsgemäße Bedien- und Anzeigegerät auf diese Weise insbesondere zur Steuerung einer Mehrzahl an Arbeitsgeräten unterschiedlichen Typs und/oder unterschiedlicher Funktionalität dienen, so dass es zur Steuerung verschiedenartiger Arbeitsmaschinen gleicher oder verschiedener Hersteller (im Falle von landwirtschaftlichen Maschinen z.B. von Sä- oder Drillmaschinen, Feldspritzen, Erntemaschinen, Bodenbearbeitungsgeräten, Ballenpressen etc. desselben oder unterschiedlichen Herstellers) und/oder funktionsgleicher bzw. funktionsähnlicher Arbeitsmaschinen verschiedener Hersteller (z.B. von einer jeweiligen Arbeitsmaschine der vorgenannten Art, welche zu demselben Bearbeitungszweck dient, aber herstellerbedingt unterschiedlich gesteuert wird) dienen kann.

Das erfindungsgemäße Bedien- und Arbeitsgerät bietet sich hierbei aus den vorgenannten Gründen insbesondere zur Steuerung von Arbeitsgeräten aus der Gruppe der landwirtschaftlichen Maschinen, aber auch aus der Gruppe der Baumaschinen und Werkzeugmaschinen an.

In vorteilhafter Ausgestaltung können die Rahmen ohne Zuhilfenahme von Werkzeugen, insbesondere rastend, klemmend und/oder magnetisch, lösbar an dem Bedien- und Anzeigegerät befestigbar sein, so dass ein einfacher und schneller Austausch der einem jeweiligen Bedien- und Anzeigemenu eines jeweiligen Arbeitsgerätes zugehörigen Rahmen sichergestellt ist. Die Rahmen können im Übrigen zweckmäßigerweise einen dem Außenumfang des berührungsempfindlichen Bildschirms etwa entsprechenden Grundrahmen besitzen, welcher den berührungsempfindlichen Bildschirm umfangsseitig umgibt, während sich die Stege nach Art eines Rasters zwischen den jeweiligen Bildschirmsegmenten der Bedien- und Anzeigemenus eines jeweiligen Arbeitsgerätes im Innern des Grundrahmens erstrecken, um die Bildschirmsegmente mit unterschiedlicher Funktion haptisch voneinander zu trennen. Die Rahmen können dabei, z.B. als Spritzgussteile, aus Kunststoff oder aus beliebigen anderen Materialien, wie Metallwerkstoffen, gefertigt sein.

Gemäß einer vorteilhaften Weiterbildung des erfindungsgemäßen Bedien- und Anzeigegerätes kann vorgesehen sein, dass ein jeweiliger Rahmen mit einer Identifizierungseinrichtung ausgestattet ist, welche mit einer Erkennungseinrichtung des Bedien- und Anzeigegerätes zusammenwirkt, wenn der jeweilige Rahmen lösbar an dem Bedien- und Anzeigegerät befestigt worden ist, wobei das Bedien- und Anzeigegerät derart programmtechnisch eingerichtet ist, dass es den berührungsempfindlichen Bildschirm in eine der Anordnung an Stegen des Rahmens im Wesentlichen entsprechende Anordnung an Bildschirmsegmenten unterteilt, um das jeweilige, dem jeweiligen Rahmen zugehörige Bedien- und/oder Anzeigemenu zu erzeugen, wenn die Erkennungseinrichtung des Bedien- und Anzeigegerätes den jeweiligen Rahmen identifiziert hat. Auf diese Weise muss der Benutzer lediglich denjenigen Rahmen, welcher dem gewünschten Bedien- und Anzeigemenu desjenigen Arbeitsgerätes entspricht, welches er gerade mit dem erfindungsgemäßen Bedien- und Anzeigegerät steuern will, lösbar an dem Bedien- und Arbeitsgerät befestigen, woraufhin dessen Erkennungseinrichtung den jeweiligen Rahmen identifiziert und das zugehörige Bedien- und Anzeigemenu aufgerufen wird, dessen Form und Größe seiner einzelnen, mit unterschiedlichen Funktionen versehenen Bildschirmsegmente der Anordnung der diese haptisch voneinander trennenden Stege des Rahmens entspricht.

Während es sich bei der Identifizierungseinrichtung des Rahmens grundsätzlich um beliebige Identifizierungseinrichtungen gemäß dem Stand der Technik handeln kann, wie beispielsweise um solche, welche maschinenlesbare, z.B. elektromagnetische, Signale aussenden, erweist es sich von Vorteil, wenn die Identifizierungseinrichtungen der Rahmen stromlos sind, so dass weder eine eigene Energieversorgung noch das Aufladen eines Stromspeichers in regelmäßigen Abständen erforderlich ist und die Rahmen zudem sehr einfach und kostengünstig herstellbar sind.

So können die Identifizierungseinrichtungen der Rahmen des Bedien- und Anzeigegerätes z.B. vorzugsweise von, insbesondere passiven, RFID-Transpondern gebildet sein, während die Erkennungseinrichtung des Bedien- und Anzeigegerätes ein mit den RFID-Transpondern der Rahmen zusammenwirkendes RFID-Lesegerät umfasst. Letzteres kann z.B. zweckmäßigerweise im Bereich des Außenumfangs des berührungsempfindlichen Bildschirms des Bedien- und Anzeigegerätes angeordnet sein, so dass es den RFID-Transponder eines jeweiligen Rahmens auszulesen vermag, wenn der jeweilige Rahmen lösbar an dem Bedien- und Anzeigegerät befestigt worden ist und sich sein RFID-Transponder somit in Nähe des RFID-Lesegerätes befindet. Das RFID-Lesegerät kann ferner von als solchem bekannten Aufbau sein und ein magnetisches Wechselfeld bzw. hochfrequente Radiowellen erzeugen, um einen in dem RFID-Transponder eines jeweiligen Rahmens hinterlegten Code berührungslos zu identifizieren.

Stattdessen kann beispielsweise auch vorgesehen sein, dass die Identifizierungseinrichtungen der Rahmen eine Mehrzahl an verschiedenartigen mechanischen Strukturen, wie Vorsprünge und/oder Vertiefungen verschiedener Anzahl und/oder Anordnung, umfassen, während die Erkennungseinrichtung des Bedien- und Anzeigegerätes mit den mechanischen Strukturen der Rahmen zusammenwirkende Sensoren umfasst. Derartige mechanische Strukturen, wie z.B. vorstehende Stege in verschiedener Anordnung oder dergleichen, können in einfacher Weise an den Rahmen angeformt sein, wobei die Erkennungseinrichtung des Bedien- und Anzeigegerätes die Anordnung dieser mechanischen Strukturen eines jeweiligen, einem jeweiligen Arbeitsgerät zugeordneten Rahmen erkennt, indem sie beispielsweise mit diesen zusammenwirkende Drucksensoren oder dergleichen umfasst.

Darüber hinaus kann es von Vorteil sein, wenn das Bedien- und Anzeigegerät infolge Berührung wenigstens eines Bildschirmsegmentes des berührungsempfindlichen Bildschirms zur Erzeugung eines akustischen und/oder haptischen Signals ausgebildet ist, um dem Benutzer - alternativ oder vorzugsweise zusätzlich zu einem optischen Signal in Form einer visuellen Anzeige auf dem Bildschirm - eine Rückmeldung in Bezug auf einen durch Berühren eines jeweiligen Bildschirmsegmentes eingegebenen Befehl zu geben, ohne dass er den berührungsempfindlichen Bildschirm im Auge haben muss.

Darüber hinaus erweist es sich als vorteilhaft, wenn das Bedien- und Anzeigegerät derart programmtechnisch eingerichtet ist, dass den verschiedenen Bildschirmsegmenten des berührungsempfindlichen Bildschirms jeweils unterschiedliche Anzeige- und/oder Steuerfunktionen eines jeweiligen Arbeitsgerätes zuordbar sind, wobei jedoch insbesondere die Form und Größe der einzelnen Bildschirmsegmente eines jeweiligen Bedien- und Anzeigemenus nicht verändert werden sollte, so dass einem jeweiligen Menu eines jeweiligen Arbeitsgerätes genau ein entsprechender Rahmen zugeordnet sein kann. Auf diese Weise kann der Benutzer die verschiedenen Funktionen der einzelnen Bildschirmsegmente vertauschen und/oder durch andere ersetzen, um sich die individuell gewünschten Funktionen in der individuell gewünschten Anordnung zusammenzustellen.

Wie bereits erwähnt, bietet sich das erfindungsgemäße Bedien- und Anzeigegerät zur Steuerung praktisch beliebiger Arbeitsgeräte, wie landwirtschaftlicher Maschinen, Baumaschinen, Werkzeugmaschinen und dergleichen an, wobei ihm einerseits seine universelle Verwendbarkeit, andererseits seine einfache und schnelle Anpassung an verschiedene, auf seinem berührungsempfindlichen Bildschirm generierte Bedien- und Anzeigemenus durch lösbares Befestigen eines entsprechenden Rahmens zunutze kommt, so dass dem Benutzer eine haptische Trennung der einzelnen, mit verschiedenen Funktionen hinterlegten Bildschirmsegmenten zur Verfügung gestellt wird und Fehlbedienungen auch in widrigem Umfeld bestmöglich verhindert werden. In besonderem Maße kann sich das erfindungsgemäße Bedien- und Anzeigegerät dabei als Zusatz-Bedien- und Anzeigegerät einer zentralen Steuereinrichtung zur Steuerung einer Mehrzahl an Arbeitsgeräten, beispielsweise in Form von landwirtschaftlichen Maschinen, anbieten, welches über eine Schnittstelle mit dem Jobrechner eines jeweiligen Arbeitsgerätes verbindbar ist. In diesem Fall kann es sich bei dem erfindungsgemäßen Bedien- und Arbeitsgerät beispielsweise um ein Zusatz-Bedien- und Anzeigegerät in Form eines sogenannten AUX-Gerätes einer Steuereinrichtung für verschiedenartige landwirtschaftliche Maschinen in Form eines ISOBUS-Datenbussystems gemäß der Norm ISO 11783 handeln.

Weitere Merkmale und Vorteile der Erfindung ergeben sich aus der nachfolgenden Beschreibung eines Ausführungsbeispiels unter Bezugnahme auf die Zeichnungen, bei welchem eine Ausführungsform eines erfindungsgemäßen Bedien- und Anzeigegerätes als Zusatz-Bedien- und Anzeigegerät in Form eines sogenannten AUX-Gerätes eines ISOBUS-Datensystems für landwirtschaftliche Maschinen gemäß ISO 11783 zum Einsatz gelangt. Dabei zeigen:
- Fig. 1: eine schematische Ansicht eines Arbeitsgerätes in Form einer landwirtschaftlichen Maschine, welche als Anbau-Düngerstreuer ausgebildet und an eine Zugmaschine angehängt ist, wobei die landwirtschaftliche Maschine mittels einer Ausführungsform eines erfindungsgemäßen Bedien- und Anzeigegerätes steuerbar ist;
- Fig. 2: eine schematische perspektivische Detailansicht des Bedien- und Anzeigegerätes gemäß Fig. 1 mit einer Ausführungsform eines hieran lösbar befestigbaren Rahmens;
- Fug. 3A-3C: je eine schematische Seitenansicht zur Veranschaulichung des lösbaren Befestigens bzw. Lösens des Rahmens von dem Bedien- und Anzeigegerät gemäß Fig. 2; und
- Fig. 4: eine schematische Seitenansicht des Bedien- und Anzeigegerätes gemäß Fig. 1 bis 3 mit einem anderen Rahmen.

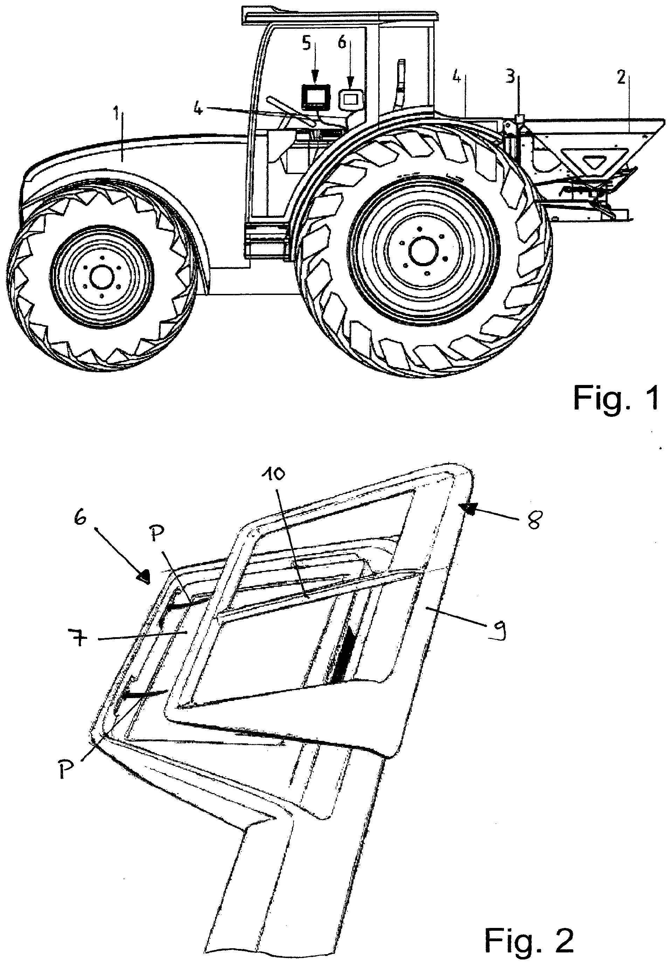

In der Fig. 1 ist eine Zugmaschine 1 in Form eines Traktors wiedergegeben, von deren Dreipunkt-Kraftheber eine landwirtschaftliche Maschine 2 - hier in Form eines Anbau-Düngerstreuers, z.B. in Form eines Zweischeiben-Düngerstreuers - aufgenommen ist. Das ISOBUS-Datensystem gemäß der Norm ISO 11783 zur Steuerung der landwirtschaftlichen Maschine 2 sowie auch anderer, nicht gezeigter Maschinen umfasst einen Jobrechner 3 der landwirtschaftlichen Maschine 2, welcher zur Steuerung der individuellen Maschinenfunktionen, wie beispielsweise zur Steuerung der Dosierorgane, des Aufgabepunktes von Verteilgut auf die Verteilerscheiben und dergleichen, umfasst. Der Jobrechner 3 des landwirtschaftlichen Maschine 2 steht im vorliegenden Fall über eine Kabelverbindung 4 mit einer zentralen Steuereinrichtung 5 in Verbindung, welche auch als "Virtual Terminal" oder "Universal Terminal" bezeichnet wird und sich z.B. im Führerhaus der Zugmaschine 1 befindet. Die zentrale Steuereinrichtung 5 umfasst üblicherweise einen Touchscreen und dient zur Anzeige von Statusdaten der landwirtschaftlichen Maschine 2 sowie zur Grundsteuerung derselben, wie beispielsweise zur Voreinstellung der gewünschten Arbeitsbreite und dergleichen. Darüber hinaus ist der zentralen Steuereinrichtung ein auch als "AUX-Gerät" bezeichnetes Zusatz-Steuer- und Anzeigegerät 6 zugeordnet, welches sich z.B. gleichfalls im Führerhaus der Zugmaschine 1 befindet und zur Steuerung der Auftragsverwaltung und Dokumentation des Arbeitsvorgangs dient. Das Steuer- und Anzeigegerät 6 verfügt gleichfalls über einen berührungsempfindlichen Bildschirm 7 (vgl. auch die Fig. 2) und ist mittels einer entsprechenden Software derart programmtechnisch eingerichtet, dass es den berührungsempfindlichen Bildschirm in Abhängigkeit von einer jeweiligen landwirtschaftlichen Maschine 2 in eine Mehrzahl an Bildschirmsegmenten unterschiedlicher Anzahl und/oder Form unterteilt, welche infolge Berührung eines jeweiligen Bildschirmsegmentes jeweils zur Anzeige und/oder Steuerung verschiedener Funktionen der jeweiligen landwirtschaftlichen Maschine 2 dienen, um in Abhängigkeit von einer jeweiligen landwirtschaftlichen Maschine 2 jeweils ein individuelles Bedien- und/oder Anzeigemenu zu erzeugen.

Wie aus der Fig. 2 ersichtlich, welche eine Ausführungsform des Bedien- und Anzeigegerätes 6 in schematischer, abgebrochener Darstellung zeigt, ist an dessen berührungsempfindlichen Bildschirm 7 eine Mehrzahl an Rahmen 8 lösbar befestigbar, wobei in der Fig. 2 exemplarisch ein solcher Rahmen 8 wiedergegeben ist. Der Rahmen 8 umfasst beispielsweise eine an den Außenumfang des berührungsempfindlichen Bildschirms 7 angepassten Grundrahmen 9 und einen oder mehrere Steg(e) 10, welche sich im Innern des Grundrahmens 9 erstrecken und entsprechend einer jeweiligen Anordnung der Mehrzahl an Bildschirmsegmenten des berührungsempfindlichen Bildschirms 7 des jeweiligen Bedien- und Anzeigemenus positioniert sind, um die Bildschirmsegmente eines jeweiligen Bedien- und/oder Anzeigemenus haptisch voneinander zu trennen und dem Benutzer eine somit eine mehr oder minder "blinde" Bedienung zu erlauben.

Im vorliegenden Fall der Fig. 2 weist der Rahmen 8 beispielsweise nur einen einzigen Steg 10 auf, um zwei Bildschirmsegmente eines entsprechenden Bedien- und/oder Anzeigemenus des berührungsempfindlichen Bildschirms 7 zur Steuerung und Anzeige unterschiedlicher Funktionen der landwirtschaftlichen Maschine 2 haptisch voneinander zu trennen. Es sei an dieser Stelle darauf hingewiesen, dass den einzelnen Bildschirmsegmenten nicht notwendigerweise nur eine Funktion zugeordnet sein muss, sondern können ihnen insbesondere mehrere Funktionen zugeordnet sein, welche z.B. durch entsprechende Untermenus verfügbar sind. Ferner muss in einem und demselben Bildschirmsegment nicht notwendigerweise nur eine Funktion hinterlegt sein, sondern können durch Berühren eines jeweiligen Bildschirmsegmentes rechts oder links bzw. oben oder unten auch verschiedene Funktionen der landwirtschaftlichen Maschine 2 ausgelöst werden, welche der Rahmen 9 dem Benutzer gleichwohl haptisch erfühlbar macht. So kann im Falle des gezeigten Zweischeiben-Düngerstreuers beispielsweise das eine Bildschirmsegment zur Steuerung der Dosierorgane und das andere Bildschirmsegment zur Steuerung der Aufgabepunkte dienen, wobei beim Berühren eines jeweiligen Bildschirmsegmentes ein Untermenu erscheint, welches das rechte/linke Dosierorgan bzw. die rechte/linke Aufgabepunkt-Verstelleinrichtung darstellt. Beim Auswählen des jeweils gewünschten Dosierorgans bzw. der jeweils gewünschten Aufgabepunkt-Verstelleinrichtung kann sodann z.B. ein weiteres Untermenu erscheinen, mittels welchem durch Berühren des jeweiligen Bildschirmsegmentes rechts oder links bzw. oben oder unten die Dosiermenge erhöht oder verringert bzw. der Aufgabepunkt in die eine oder in die andere Richtung verstellt werden kann, usw.

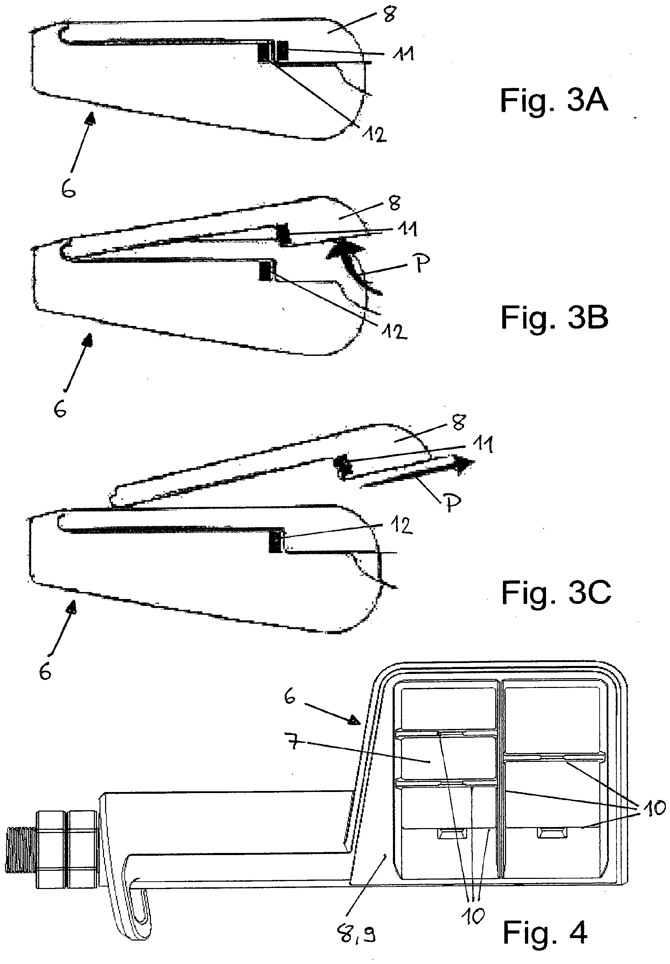

Wie ferner der Fig. 2 sowie den Fig. 3A bis 3C zu entnehmen ist, ist der bzw. sind die Rahmen 8 zweckmäßigerweise ohne Zuhilfenahme von Werkzeugen lösbar an dem Bedien- und Anzeigegerät 6 befestigbar, wobei sie beim vorliegenden Ausführungsbeispiel mittels an dem Rahmen 8 angeformter Laschen, welche in hierzu komplementäre Ausnehmungen im Umfangsbereich des berührungsempfindlichen Bildschirms 7 des Bedien- und Anzeigegerätes 6 in Eingriff bringbar sind, lösbar aneinander verrastbar sind, wie dies in den Fig. 2 und 3 durch die Pfeile P angedeutet ist.

Wie darüber hinaus aus den Fig. 3A bis 3C hervorgeht, ist ein jeweiliger Rahmen 8 ferner mit einer Identifizierungseinrichtung 11 ausgestattet, welche zweckmäßigerweise stromlos wirksam ist und beispielsweise einen passiven RFID-Transponder umfasst, auf welchem ein den jeweiligen Rahmen 8 bzw. die zugehörige landwirtschaftliche Maschine 2 identifizierender Code abgespeichert ist. Die Identifizierungseinrichtung 11 eines jeweiligen Rahmens 8 wirkt mit einer Erkennungseinrichtung 12 des Bedien- und Anzeigegerätes 6 zusammen, bei welcher es sich im vorliegenden Fall um ein RFID-Lesegerät handelt, die Erkennungseinrichtung 12 ist an einer Stelle im Umfangsbereich des berührungsempfindlichen Bildschirms 7 des Bedien- und Anzeigegerätes 6 positioniert, dass die Identifizierungseinrichtung 11 des jeweiligen Rahmens 8 in deren Wirkbereich angeordnet ist, wenn der jeweilige Rahmen lösbar an dem Bedien- und Anzeigegerät befestigt worden ist (vgl. die Fig. 3C). Das Bedien- und Anzeigegerät 6 ist dabei mittels entsprechender Software derart programmtechnisch eingerichtet, dass es den berührungsempfindlichen Bildschirm 7 in eine der Anordnung an Stegen 10 des Rahmens 8 entsprechende Anordnung an Bildschirmsegmenten unterteilt, um das jeweilige, dem jeweiligen Rahmen 8 bzw. der jeweiligen landwirtschaftlichen Maschine 2 zugehörige Bedien- und/oder Anzeigemenu zu erzeugen, wenn die Erkennungseinrichtung 12 den jeweiligen Rahmen 8 identifiziert hat, so dass durch lösbare Befestigung eines jeweiligen Rahmens 8 an dem Bedien- und Anzeigegerät 6 automatisch das Bedien- und/oder Anzeigemenu der zugehörigen landwirtschaftlichen Maschine 2 erzeugt wird, dessen Anordnung und Form an Bildschirmsegmenten jener der Stege 10 eines jeweiligen Rahmens 8 entspricht.

Der berührungsempfindliche Bildschirms 7 des Bedien- und Anzeigegerätes 8 kann infolge Berührung wenigstens eines seiner Bildschirmsegmente eines jeweiligen Bedien- und/oder Anzeigemenus ferner die Erzeugung eines akustischen und/oder haptischen Signals, wie z.B. einer Vibration, auslösen, um dem Benutzer eine Rückmeldung eines eingegebenen Steuerbefehls zu geben, ohne dass er den berührungsempfindlichen Bildschirm 7 betrachten muss. Ferner kann es der individuellen Bedienerfreundlichkeit dienen, wenn das Bedien- und Anzeigegerät 6 mittels entsprechender Software derart programmtechnisch eingerichtet ist, dass den verschiedenen Bildschirmsegmenten des berührungsempfindlichen Bildschirms 7 jeweils unterschiedliche Anzeige- und/oder Steuerfunktionen einer jeweiligen landwirtschaftlichen Maschine 2 zugeordnet werden können, so dass der Benutzer den verschiedenen Bildschirmsegmenten individuell die von ihm gerade gewünschten Funktionen zuzuweisen sowie insbesondere auch abzuspeichern vermag.

In der Fig. 4 ist schließlich nochmals dasselbe Bedien- und Anzeigegerät 6 dargestellt, nachdem es mit einem anderen Rahmen 8 mit einer unterschiedlichen Anzahl und Anordnung von die einzelnen Bildschirmsegmente haptisch voneinander trennenden Stegen 10 versehen worden ist, wobei der Rahmen 8 bzw. das ihm zugeordnete Anzeige- und/oder Bedienmenu zur Steuerung einer andersartigen landwirtschaftlichen Maschine dient, wie beispielsweise eines andersartigen Düngerstreuers, einer Sä- oder Drillmaschine, einer Feldspritze, einer Erntemaschine, eines Bodenbearbeitungsgerätes, einer Ballenpresse oder dergleichen mehr.

## Patentansprüche

1. Bedien- und Anzeigegerät (6) zur Steuerung einer Mehrzahl an Arbeitsgeräten, mit wenigstens einem berührungsempfindlichen Bildschirm (7), wobei das Bedien- und Anzeigegerät (6) derart programmtechnisch eingerichtet ist, dass es den berührungsempfindlichen Bildschirm (7) in eine Mehrzahl an Bildschirmsegmenten zu unterteilen vermag, welche infolge Berührung eines jeweiligen Bildschirmsegmentes zur Anzeige und/oder Steuerung verschiedener Funktionen des Arbeitsgerätes dienen, um ein Bedien- und/oder Anzeigemenü zu erzeugen, **dadurch gekennzeichnet, dass** das Bedien- und Anzeigegerät (6) ferner derart programmtechnisch eingerichtet ist, dass es den berührungsempfindlichen Bildschirm (7) in Abhängigkeit von einem jeweiligen Arbeitsgerät in eine Mehrzahl an Bildschirmsegmenten unterschiedlicher Anzahl und/oder Form unterteilt, welche infolge Berührung eines jeweiligen Bildschirmsegmentes jeweils zur Anzeige und/oder Steuerung verschiedener Funktionen des jeweiligen Arbeitsgerätes dienen, um in Abhängigkeit von einem jeweiligen Arbeitsgerät jeweils ein individuelles Bedien- und/oder Anzeigemenu zu erzeugen, und dass dem berührungsempfindlichen Bildschirm (7) eine Mehrzahl an lösbar an dem Bedien- und Anzeigegerät (6) befestigbaren Rahmen (8) zugeordnet ist, welche jeweils eine einer jeweiligen Anordnung der Mehrzahl an Bildschirmsegmenten des berührungsempfindlichen Bildschirms im Wesentlichen entsprechende Anordnung an Stegen (10) aufweisen, um die Bildschirmsegmente eines jeweiligen Bedien- und/oder Anzeigemenus haptisch voneinander zu trennen.

2. Bedien- und Anzeigegerät nach Anspruch 1, **dadurch gekennzeichnet, dass** es zur Steuerung einer Mehrzahl an Arbeitsgeräten unterschiedlichen Typs und/oder unterschiedlicher Funktionalität dient.

3. Bedien- und Anzeigegerät nach Anspruch 1 oder 2, **dadurch gekennzeichnet, dass** die Arbeitsgeräte aus der Gruppe der landwirtschaftlichen Maschinen (2), Baumaschinen und Werkzeugmaschinen gewählt sind.

4. Bedien- und Anzeigegerät nach einem der Ansprüche 1 bis 3, **dadurch gekennzeichnet, dass** die Rahmen (8) ohne Zuhilfenahme von Werkzeugen, insbesondere rastend, klemmend und/oder magnetisch, lösbar an dem Bedien- und Anzeigegerät (6) befestigbar sind.

5. Bedien- und Anzeigegerät nach einem der Ansprüche 1 bis 4, **dadurch gekennzeichnet, dass** ein jeweiliger Rahmen (8) mit einer Identifizierungseinrichtung (11) ausgestattet ist, welche mit einer Erkennungseinrichtung (12) des Bedien- und Anzeigegerätes (6) zusammenwirkt, wenn der jeweilige Rahmen (8) lösbar an dem Bedien- und Anzeigegerät (6) befestigt worden ist, wobei das Bedien- und Anzeigegerät (6) derart programmtechnisch eingerichtet ist, dass es den berührungsempfindlichen Bildschirm (7) in eine der Anordnung an Stegen (10) des Rahmens (8) im Wesentlichen entsprechende Anordnung an Bildschirmsegmenten unterteilt, um das jeweilige, dem jeweiligen Rahmen (8) zugehörige Bedien- und/oder Anzeigemenu zu erzeugen, wenn die Erkennungseinrichtung (12) des Bedien- und Anzeigegerätes (6) den jeweiligen Rahmen (8) identifiziert hat.

6. Bedien- und Anzeigegerät nach Anspruch 5, **dadurch gekennzeichnet, dass** es sich bei den Identifizierungseinrichtungen (11) der Rahmen (8) um stromlose Identifizierungseinrichtungen handelt.

7. Bedien- und Anzeigegerät nach Anspruch 5 oder 6, **dadurch gekennzeichnet, dass** die Identifizierungseinrichtungen (11) der Rahmen (8) von RFID-Transpondern gebildet sind, während die Erkennungseinrichtung (12) des Bedien- und Anzeigegerätes (6) ein mit den RFID-Transpondern der Rahmen (8) zusammenwirkendes RFID-Lesegerät umfasst.

8. Bedien- und Anzeigegerät nach Anspruch 5 oder 6, **dadurch gekennzeichnet, dass** die Identifizierungseinrichtungen (11) der Rahmen (8) eine Mehrzahl an verschiedenartigen mechanischen Strukturen, wie Vorsprünge und/oder Vertiefungen verschiedener Anzahl und/oder Anordnung, umfassen, während die Erkennungseinrichtung (12) des Bedien- und Anzeigegerätes (6) mit den mechanischen Strukturen der Rahmen (8) zusammenwirkende Sensoren umfasst.

9. Bedien- und Anzeigegerät nach einem der Ansprüche 1 bis 8, **dadurch gekennzeichnet, dass** es infolge Berührung wenigstens eines Bildschirmsegmentes des berührungsempfindlichen Bildschirms (7) zur Erzeugung eines akustischen und/oder haptischen Signals ausgebildet ist.

10. Bedien- und Anzeigegerät nach Anspruch 9, **dadurch gekennzeichnet, dass** das Bedien- und Anzeigegerät (6) derart programmtechnisch eingerichtet ist, dass den verschiedenen Bildschirmsegmenten des berührungsempfindlichen Bildschirms (7) jeweils unterschiedliche Anzeige- und/oder Steuerfunktionen eines jeweiligen Arbeitsgerätes zuordbar sind.

11. Bedien- und Anzeigegerät nach einem der Ansprüche 1 bis 10, **dadurch gekennzeichnet, dass** es sich um ein Zusatz-Bedien- und Anzeigegerät einer zentralen Steuereinrichtung (5) zur Steuerung einer Mehrzahl an Arbeitsgeräten handelt, welches über eine Schnittstelle mit dem Jobrechner (3) eines jeweiligen Arbeitsgerätes verbindbar ist.

12. Bedien- und Anzeigegerät nach Anspruch 11, **dadurch gekennzeichnet, dass** es sich um ein Zusatz-Bedien- und Anzeigegerät in Form eines AUX-Gerätes einer Steuereinrichtung (5) für landwirtschaftliche Maschinen (2) in Form eines ISOBUS-Datenbussystems gemäß der Norm ISO 11783 handelt.
